# EUROPEAN PATENT APPLICATION

(11) **EP 2 375 335 A1**
(43) Date of publication of application: **12.10.2011**
(21) Application number: 10400022.9
(22) Date of filing: 09.04.2010
(51) Int. Cl.: G06F 11/26

(54) **Method for automated testing of a system and automated testing system for such a method**

(71) Applicant: Eurocopter Deutschland GmbH, 86609 Donauwörth (DE)
(72) Inventor: Engelkes, Olivier, 82008 Unterhaching (DE)
(74) Representative: Pouillot, Laurent Pierre Paul

(57) **Abstract**

The invention relates to a method for automated testing of a system with at least one test equipment with the following steps: Providing at least one test document with instructions for the at least one test equipment from a repository via a first interface to a governor unit (GU) of the test system and providing at least one generic resource unit as a communication interface unit between the governor unit and the test equipment, passing information from the governor unit to the test equipment regarding the type and number of said test equipment, matching the instructions from said data repository with the information regarding the type and number of said at least one test equipment, distributing the matched instructions via the respective second interface to the generic resource unit, translating in each generic resource unit the matched instructions of the at least one test document into a native language of said at least one test equipment and loading and executing from the generic resource unit the translated instructions of the at least one test document to the respective test equipment for testing the system. The invention relates as well to an automated testing system for such a method.

## Description

The invention relates to a method for automated testing of a system with the features of claim 1, particularly for automated testing of an aircraft system or more particularly for automated testing of a helicopter system and an automated testing system for such a method with the features of claim 8.

Electronic systems on board aircraft and rotorcraft generally include a plurality of computers connected in particular to sensors, to actuators, and to user interfaces. Testing such systems for proper operation is complex and lengthy and is consequently expensive as it is difficult to prepare and carry out such tests, in particular because of the large amount of signals and data that are exchanged by the pieces of equipment while they are in operation, and because of the large number of possible configurations for the pieces of equipment constituting the electronic system. Given the complexity of any of the systems for testing, a complete sequence of commands that is sufficient for testing a determined function can comprise one or several thousands of commands.

Avionic software products, such as for the NH 90 helicopter, have to undergo a formal qualification test before admission requiring a huge amount of work and thus not allowing - if done manually - sufficient quantity and quality of such testing. Generating command sequences for applying to the test apparatus requires the skills of highly-qualified human operators. Because of the wide variety of the pieces of equipment that form part of an avionics system, it is difficult if not impossible to find an operator who is fully qualified for all of the kinds of equipment in the system and for all of the functions that the system as a whole is called on to perform. It is therefore generally necessary to rely on a plurality of operators selected for their high levels of qualification but each concerning only some of the pieces of equipment and/or the functions to be tested. For a given command, two distinct operators may select two distinct values for such-and-such a parameter or variable of that command, thereby likewise producing two different test reports. Comparing such test reports can be meaningless or can lead to a wrong conclusion.

By automating the formal qualification test execution, the repetitive "non-intelligent" tasks may be eliminated in favour of tasks requiring the special abilities of test-engineers such as test design and investigative work on error discovery. Known automatic test solutions focus on automating a single test resource, implicating many drawbacks, e. g. the resource centric approach is tied to that single resource and cannot communicate with other test resources, or only at high costs and/or complexity. The test documents need to be specialized to that specific resource, i. e. its manufacturer's data formats, not allowing easy switching between different test resources as this would entail the modification of the qualified test documents.

EP 1583289 (A2) discloses a system with a simulation layer controlling an Ethernet controller and a commercial Ethernet switch ensuring switching of avionics full duplex (AFDX) data. A processor has Ethernet connection units, Ethernet frames transmission sequencing units, which permit a temporal placement of the Ethernet frames conforming to the requirements of an AFDX network, and Ethernet frames receiving units.

US 2009/0019311 (A1) discloses a method of preparing a test for an electronic system including a plurality of pieces of equipment interconnected by at least one communications link. In order to perform the test, use is made of a test bench appropriate for the electronic system under test, which test bench is connected to the system and controlled in application of a command sequence automatically established from at least one informal functional specification such functional specification being defined as a formalized test procedure in the form of a set of objects in a database. While preparing the test, the informal functional specification, the command sequence, and a link identifying the informal functional specification from which the command sequence was established are all recorded so that after execution of the command sequence and after the test results have been recorded, it is possible to read the link and identify unambiguously the informal functional specification that corresponds to the test results obtained. A frame attribute is provided for object classes. During automatic generation of a sequence of test commands from a procedure including an object presenting this attribute, the attribute is used to adapt the test command to a protocol -i.e. a data exchange format- that matches the protocol used by the pieces of equipment in the system SE for communicating. The frame attribute is used to specify the physical routing defined on the test bench. Testing according to this state of the art is provided at chip level, i. e. at a low level system.

An object of the invention is to provide a method and/or a system for testing and simulating a complex electronic system while improving and/or remedying, at least in part, the shortcomings or drawbacks of previously known test methods and systems.

A solution of the invention is provided according to a method with the features of claim 1 and with a system with the features of claim 8.

According to the invention a method is provided for automated testing of a system under test comprising at least one test equipment. The inventive method includes the following steps:
Providing at least one test document with instructions in an abstract, manufacturer's data independent format for the at least one test equipment from a repository via a first interface to a governor unit (GU),
Providing at least one generic resource unit as a communication interface between the governor unit and the test equipment,
Passing information from the governor unit to the test equipment regarding the type and number of said test equipment via a second interface at the generic resource,
Matching at the governor unit the instructions from said data repository with the information regarding the type and number of said test equipment,
Distributing the matched instructions of the at least one test document from the governor unit via the respective second interface to the generic resource unit,
Translating in each generic resource unit the matched instructions of the at least one test document into a native language of said at least one test equipment,
Loading and executing from the generic resource unit the translated instructions of the at least one test document to the respective test equipment for testing the system (SUT),
Passing signals resulting from each of the executed tests from the respective test equipment through said generic resources via the respective second interfaces to the governor unit,
Evaluating the signals resulting from each of the executed tests in the generic resource unit, and
Reporting test step results from the governor unit to the repository. The invention allows testing of the system under test for 24 hours during 7 days/week.

A preferred embodiment of the invention is described by way of the accompanying drawings.

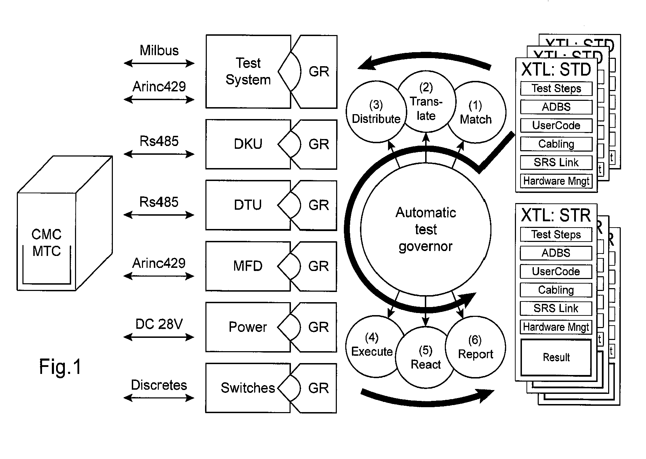

Fig. 1 shows a chart of a system under test according to the invention.

Fig. 1: A system under test, particularly for automated testing of an aircraft system or more particularly for automated testing of a helicopter system, is an embedded computer in the form of a core management computer and/or a mission tactical computer, CMC/MTC. Said core management and/or mission tactical computer is plugged into a cartridge providing all interfaces of for example a helicopter (not shown). The cartridge is connected to a panel providing links to a test bench.

The test bench is composed of at least one test equipment. A test equipment may be real devices as provided onboard a helicopter, e. g. a Test System, a display and keyboard unit (DKU), a data transfer device (DTD), a multifunctional display (MFD), a power supply (Power) and/or Switches, such test equipments being operated manually according to the state of the art. A test system is one kind of test equipment and may be a VME crate by inserting cpu and interface cards being controlled by a control PC, allowing communication of the VME-Crate with data buses of the CMC/MTC and/or with elements such as CPU-cards for real time processing of for example an advanced integrated data acquisition and stimulation system controlled by a common personal computer via a user interface allowing the user to opt for signals, e. g. electric impulses, electronic messages, etc., for stimulation of the CMC/MTC.

For automatic control of said plurality of at least partly different test equipments a repository (XTL: STD) is provided with at least one test document with instructions containing simple atomic test commands in an abstract device's and manufacturer's independent format, such as XTL-commands based on the XML formal description language.

The at least one test document is communicated from said repository via a first interface to an automatic test governor unit. The automatic test governor unit may be a computer.

Generic resource units (GR) are provided as communication interfaces attached to said test equipments having second interfaces being all the same towards the automatic test governor for equal assignment of all kinds of different test equipments to the automatic test governor unit via said same second interfaces of all generic resource units.

The automatic test governor unit is provided with a matching tool (1) with functionality to take and communicate said simple atomic test commands depending from the assigned test equipments. A given installation is configured according to what test equipments are available in the test bench: this configuration is used to determine which parts of the test documents are going to be executed by which test resource. The automatic test governor unit checks the information regarding type and number of the assigned test equipments and selects accordingly the appropriate atomic test commands from the at least one test document. The automatic test governor registers the assigned generic resource units.

The automatic test governor is further provided with a distribution tool (3) having a functionality communicating said simple atomic test commands to the at least one assigned test equipment via said second interface of the assigned generic resource unit or distributing said simple atomic test commands to the more than one assigned test equipments via said respective second interfaces of the assigned generic resource units.

The automatic test governor is further provided with an execution tool (4) with Load and Execution functionality for contact of the generic resources in the order predefined in the instructions for executing at least one of said matched atomic test commands.

The governor unit provides a reaction tool (5) with communication functionality between the governor unit and a user interface unit for exchanging a user feedback in case a generic resource unit has a malfunction or is not available. Such user feedback may be manually triggered. The automatic test governor is further provided with a report tool (6) having a reporting functionality providing a software test result after consolidation and attached to the corresponding XTL instruction towards a data base XTL: STR.

Each of the generic resource units attached to a test equipment is provided with translation means suitable to translate the matched instructions into a native language of the test equipment the respective generic resource unit is attached to. The at least one test equipment is connected to the system under test via third interfaces such as Milbus, Arinc 429 or Rs485.

Method for automated testing of the automated testing System

For automated testing of a system in the form of an embedded computer at least one test document with instructions for at least one test equipment and/or test system is provided from a repository via a first interface to the governor unit of the test system, said instructions being composed of simple atomic test commands in an abstract format, e. g. an XTL format independent from the manufacturer's or the device's native language.

A test equipment, e. g. a display and keyboard unit (DKU), may be simulated into a test system by means of software at a respective generic resource said simulation being effected for transparent communication to the core management tactical computer by a "man in the middle technique" said technique being used to pretend to the system under test and to the governor unit that they would both communicate to a partner of the same realm whereas both are effectively communicating with a partner from another realm. The at least one test equipment and/or test system are initialized for loading of test commands or an entire test document.

Said governor unit checks and registers the information regarding type and number of test equipments and/or test systems assigned to each of the generic resources. The instructions from said data repository are matched with the information regarding the type and number of said test equipment selecting which of the simple atomic test commands has to be assigned to which test equipment and/or test system via the second interfaces and which of said generic resource units are suitable to execute the respective test commands of said instructions. The governor unit subsequently distributes the matched instructions of the at least one test document from the governor unit via the respective second interfaces to the generic resource units.

The matched instructions are translated in each of the respective generic resource units from the abstract format of the at least one test document into any of the native languages of each of the assigned test equipments. After translation the governor unit controls the assigned generic resource units to load and execute the translated instructions from the generic resource unit to the respective test equipment for automatic testing of the system. The respective test equipment executes the instructions, e. g. such test equipment being simulated by means of software. Signals resulting from each of the executed tests are passed from the respective test equipment through said generic resources via the respective second interfaces to the governor unit and these signals resulting from each of the executed tests are evaluated in the governor unit said governor unit deciding whether to go on with the test instructions as predefined, alter all or parts of the following test instructions or interrupt the test procedure as a consequence of the received signals from the test equipments. Manual interaction from a user is allowed in order to control singular aspects of a test in progress or may be used as a fallback for a technical failure of an automatic module: the user may either correct the situation until which the test execution is suspended or a rematching can be performed and all test commands toward the missing test equipment are redirected to the user for alternative execution of said command. The signals of the test step results are consolidated and attached to the XTL format test document to form a software test result by means of a reporting functionality of the governor unit such software test result being stored in the repository.

## Claims

1. Method for automated testing of a system, particularly a system under test (SUT) comprising at least one test equipment with the following steps:
Providing at least one test document with instructions in an abstract, manufacturer's data independent format for the at least one test equipment from a repository via a first interface to a governor unit (GU),
Providing at least one generic resource unit as a communication interface unit between the governor unit and the test equipment,
Passing information from the governor unit to the test equipment regarding the type and number of said test equipment via a second interface between the at least one generic resource unit and the generic resource unit,
Matching the instructions from said data repository with the information regarding the type and number of said at least one test equipment,
Distributing the matched instructions of the at least one test document from the governor unit via the respective second interface to the generic resource unit,
Translating in each generic resource unit the matched instructions of the at least one test document into a native language of said at least one test equipment,
Loading and executing from the generic resource unit the translated instructions of the at least one test document to the respective test equipment for testing the system (SUT),
Passing signals resulting from each of the executed tests from the respective test equipment through said generic resources via the respective second interfaces to the governor unit,
Evaluating the signals resulting from each of the executed tests in the generic resource unit, and
Reporting test step results from the governor unit to the repository.

2. Method according to claim 1, **characterized by** generating reactions in the governor according to the evaluated signals and loading and executing said reactions from the governor unit via the respective second interface through said generic resources to the respective test equipment.

3. Method according to claim 1, **characterized by** consolidating the evaluated test result signals in the governor unit before reporting them from the governor to the repository.

4. Method according to claim 1, **characterized by** simulating a test equipment by means of software at a respective generic resource.

5. Method according to claim 4, **characterized by** applying a "man in the middle technology" for the simulated test equipment at a respective generic resource.

6. Method according to claim 1, **characterized by** providing at the generic resource a tool for transmitting translated instructions via an interface unit to the respective test equipment.

7. Method according to claim 1, **characterized by** initializing said at least two test equipments completely and loading said at least two test equipments with an entire test document.

8. An automated testing system for a system under test (SUT), particularly for a Core Management and Tactical Computer, comprising at least one test equipment, with
a repository with at least one test document with instructions containing simple atomic test commands in an abstract format,
a governor unit, the at least one test document being communicated from said repository to said governor unit via a first interface,
generic resource units as communication interface units attached to said test equipments having all second interfaces being the same towards the governor unit for assignment of at least one of the test equipments to the governor unit via said second interfaces,
the governor unit being provided with a matching tool (1) with functionality to take and communicate said simple atomic test commands depending from the assigned test equipments and with an executing tool (4) with Load and Execution functionality for contact of the generic resources in the order predefined in the instructions for executing of at least one test, and
a test result document receiving the results from executed tests via the governor unit,
the generic resource units being provided with translation means suitable to translate the matched instructions into a native language of said respective test equipment.

9. An automated testing system according to claim 8, **characterized in that** the governor unit provides a communication functionality between the governor unit and a user interface unit for exchanging a manually triggered user feedback.

10. An automated testing system according to claim 8, **characterized in that** the governor unit is provided with a tool (2) having a translation functionality.

11. An automated testing system according to claim 8, **characterized in that** the governor unit is provided with a distribute tool (3) having a distribution functionality.

12. An automated testing system according to claim 8, **characterized in that** the governor unit is provided with a react tool (5) having a reaction functionality.

13. An automated testing system according to claim 8, **characterized in that** the governor unit is provided with a report tool (6) having a reporting functionality.

14. An automated testing system according to claim 8, **characterized in that** the generic resource is suitable for attachment to at least one test equipment.

15. An automated testing system according to claim 8, **characterized in that** the test equipment is linked to the system under test (SUT) via at least one databus.
